# EUROPÄISCHE PATENTSCHRIFT

(11) **EP 2 745 973 B1**
(45) Veröffentlichungstag und Bekanntmachung des Hinweises auf die Patenterteilung: **30.05.2018**
(21) Anmeldenummer: 13198711.7
(22) Anmeldetag: 20.12.2013
(51) Int. Cl.: B23K 20/12, B23K 20/16, F16B 39/00, B21J 15/02

(54) **Reibschweißelement**
Friction welding element
Élément de soudage par friction

(30) Priorität: 21.12.2012 DE 102012112895
(43) Veröffentlichungstag der Anmeldung: 25.06.2014
(73) Patentinhaber: EJOT GmbH & Co. KG, 57319 Bad Berleburg (DE)
(72) Erfinder: Zebisch, Sebastian, 99897 Tambach-Dietharz (DE); Mielisch, Marco, 99099 Erfurt (DE)
(74) Vertreter: Puschmann Borchert Bardehle Patentanwälte Partnerschaft mbB

(56) Entgegenhaltungen:
- EP-A1- 1 760 333
- WO-A1-2006/061203
- DE-A1-102007 030 806
- US-A1- 2005 220 533

## Beschreibung

Die Erfindung betrifft ein Reibschweißelement zur Verbindung mit wenigstens einem Bauteil.

In bekannter Weise umfasst ein Reibschweißelement zur Verbindung eine Reibschweißgeometrie, insbesondere einen Dorn, und einen eine Antriebsgeometrie aufweisenden Kopf. Das Reibschweißelement wird mit seiner Reibschweißgeometrie mit wenigstens einem Bauteil verschweißt. Dadurch kann eine Verbindung zweier, insbesondere plattenförmiger, Bauteile erzielt werden, indem ein oberes dem Kopf nächstliegendes Bauteil über das Reibschweißelement, das mit einem unteren Bauteil verbunden ist mit diesem zusammengehalten wird. Alternativ kann auch nur das Reibschweißelement selbst mit einem dem Kopf nächstliegenden Bauteil verbunden werden und damit eine Anbindungsstelle für weitere Bauteile bereitstellen.

Bei einem Reibschweißvorgang entsteht durch die Drehung des Reibschweißelements unter Einfluss einer Axialkraft Wärme. Unter teilweisem Aufschmelzen der Reibschweißgeometrie, bzw. des Reibdorns, wird das Reibschweißelement mit einem Bauteil verbunden.

Nach dem Stand der Technik sind die Übergangsbereiche zwischen einem mit oder über das Reibschweißelement verbundenen Bauteil und dem Reibschweißelement nicht zuverlässig abgedichtet, wodurch der Bauteilverbund anfällig für Korrosion wird.

Zwar offenbart die DE 10 2007 030 806 A1 ein Reibelement das an seiner Kopfunterseite mit einem Klebstoff beschichtet ist, der während des Reibschweißvorgangs aufschmilzt, jedoch sorgt diese Anordnung nur für eine ungenügende Abdichtung der Verbindungsstelle, insbesondere dem am Kopf anliegenden Bauteil.

Es ist Aufgabe der Erfindung ein Reibschweißelement anzugeben, das eine zuverlässige Abdichtung der Reibschweißverbindung gewährleistet.

Die Aufgabe wird durch die kennzeichnenden Merkmale des Anspruchs 1 in Verbindung mit seinen Oberbegriffsmerkmalen gelöst. Die Unteransprüche bilden vorteilhafte Weiterbildungen der Erfindung.

In bekannter Weise umfasst ein Reibschweißelement zur Verbindung mit einem Bauteil eine Reibschweißgeometrie, insbesondere einen Dorn, einen Kopf und eine damit verbundenen Antriebsgeometrie. Antriebsgeometrie und Kopf können einstückig ausgebildet sein.

Während des Reibschweißvorgangs, entsteht durch die Drehung des Reibschweißelements unter Einfluss einer Axialkraft Wärme. Unter Aufschmelzen der Reibschweißgeometrie können auf diese Weise ein unteres und ein oberes Bauteil verbunden werden.

In bekannter Weise ist am Kopf ein Werkstoff angebracht, der durch die im Reibschweißvorgang erzeugte Wärme bei Kontakt mit der Oberfläche eines dem Kopf nächstliegenden Bauteils aufschmilzt und sich bei Abkühlung verfestigt. Ein Reibschweißvorgang kann in eine Reibphase und eine Stauchphase aufgeteilt sein. Die Wärme kann während der Reibphase und / oder während der Stauchphase auf den Werkstoff übertragen werden. Indem der Werkstoff während des Reibschweißvorgangs aufgeschmolzen wird und nach Abschluss des Reibschweißvorgangs aushärtet, wird der Übergangsbereich zwischen dem Reibschweißelement und dem Bauelement versiegelt. Diese Versiegelung verhindert ein Eindringen von Feuchtigkeit, wodurch eine Korrosion weitestgehend vermieden werden kann.

Erfindungsgemäß ist das Reibschweißelement derart gestaltet, dass der Werkstoff wenigstens radial außen am Kopf, der die Antriebsgeometrie aufweist, angeformt ist. Durch die umlaufende Anformung des Werkstoffs, insbesondere Kunststoffes, am Rand des Kopfes des Reibschweißelements kann diese Ausgestaltung vor allem bei einem Reibschweißprozess, bei dem Reib- und Stauchphase aufeinanderfolgen, eingesetzt werden.

Da durch die erfindungsgemäße Lösung dem Reibschweißvorgang nachfolgende Versiegelungsprozesse überflüssig werden, wird eine äußerst günstige und zeitsparende Lösung bereitgestellt, bei der die Reibwärme synergetisch zur Versiegelung der Verbindungsstelle eingesetzt wird.

Als besonders vorteilhaft hat sich die Verwendung eines Kunststoffes, insbesondere eines thermoplastischen Kunststoffes, erwiesen. Kunststoffe haben den Vorteil, dass sie nicht nur gute Versiegelungseigenschaften bezüglich Aerosolen oder Ähnlichem aufweisen, sondern aufgrund ihrer elektrischen Isolationseigenschaften zusätzlich zur Korrosionsminderung beitragen. Auch Lote sind im Sinne der Erfindung als Werkstoffe vorgesehen.
In der Reibphase wird Wärme unter axialem Druck durch die Drehung des Reibelements erzeugt. Diese Wärme wird an die Oberfläche des oberen Bauteils übertragen. Nach Abschluss der Reibphase wird das Reibschweißelement gestaucht und damit in das erhitzte obere Bauteil eingedrückt. Dadurch kommt der seitlich umlaufend angeformte Werkstoff in Kontakt mit der erhitzten Oberfläche des oberen Bauteils und schmilzt auf. Dadurch versiegelt dieser umlaufend die Verbindungsstelle mit dem angedrückten Reibelement. Nach Abkühlung der Verbindungsstelle erhärtet der Schmelzbereich und gewährleistet dauerhaft eine Abdichtung der Verbindungsstelle.
Gemäß einer weiteren Ausführungsform kann der Werkstoff wenigstens eine Unterkante des Kopfes bedecken, wobei diese Unterkante die Anlagefläche des Kopfes am oberen Bauteil bildet.
Indem die Unterkante des Kopfes mit dem Werkstoff abgedeckt ist, wird diese während der Andrückung des Kopfes an die Oberfläche des oberen Bauelements aufgeschmolzen. Dieses Aufschmelzen kann während einer reinen Stauchphase erfolgen oder in einer kombinierten Bewegung aus Reib- und Stauchphase. Bei einer kombinierten Bewegung unter Verbindung von Stauch- und Reibphase, kann der Werkstoff neben der Oberflächentemperatur des oberen Bauelements zusätzlich die Wärme aufnehmen, die durch die Drehreibung des Kopfes an dem oberen Bauteil entsteht.
Wird der Werkstoff zwischen dem Kopf und dem oberen Bauelement aufgeschmolzen, kann der eindringende Kopf die darunterliegende Schmelze verdrängen. Die Schmelze kann dabei geringe Unebenheiten zwischen Kopf und oberem Bauteil ausfüllen.

Eine nicht erfindungsgemässe Form der Anbringung des Werkstoffes im Übergang vom Kopf zu einem Bauteil ist die Ausbildung des Werkstoffs als Scheibe, deren Außendurchmesser wenigstens dem des Kopfes entspricht und die eine konzentrische Ausnehmung mit wenigstens dem Lochdurchmesser des Reibdorns aufweist. Im Verbund der Scheibe mit dem Reibschweißelement ragt der Dorn durch die Scheibe.

Die Schmelztemperatur des Werkstoffs liegt vorzugsweise unter der des Reibschweißelements. Als besonders vorteilhaft haben sich Kunststoffe, insbesondere thermoplastische Kunststoffe, erwiesen, die eine Schmelztemperatur zwischen 250°C und 400°C besitzen. Dies sorgt einerseits für eine unproblematische Handhabung und gewährleistet andererseits ein zuverlässiges Aufschmelzen bei der im Reibprozess entstehenden Temperaturen.

In einer weiteren Ausführungsform kann der gesamte Kopf des Reibschweißelements einschließlich der Antriebsgeometrie mit Kunststoff umspritzt werden. Die an der Unterkante und seitlich am Kopfrand anliegenden Teile werden, wie zuvor beschrieben, aufgeschmolzen und bilden dadurch die Versiegelung der Verbindungsstelle. Gleichzeitig bleibt der die Antriebsgeometrie einschließende Bereich des Kunststoffs bestehen, wodurch die gesamte Reibschweißverbindung gegenüber äußeren Einflüssen geschützt ist. Zudem können Schäden an der Antriebsgeometrie, die durch den Angriff des Drehwerkzeugs hervorgerufen werden können, durch diese Gestaltung ausgeschlossen werden.

Eine Fortbildung der Erfindung ergibt sich, indem die Antriebsgeometrie des Reibschweißelements aus dem Werkstoff, insbesondere Kunststoff, ausgebildet ist. In dieser Ausbildung, kann die Antriebsgeometrie vorzugsweise über eine Verzahnung drehsicher mit dem Kopf, der insbesondere aus Metall ausgebildet und in den Dorn übergeht, in Eingriff stehen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine Schnittansicht eines Reibschweißelements mit einem daran angeformten Massebolzen;
- Fig. 2: ein Anwendungsbereich in Kombination mit einem Reibnagel;
- Fig. 3: ein Reibelement, das einstückig aus einem Metall hergestellt ist, und
- Fig. 4: eine weitere Ausführungsform eines Reibelements.

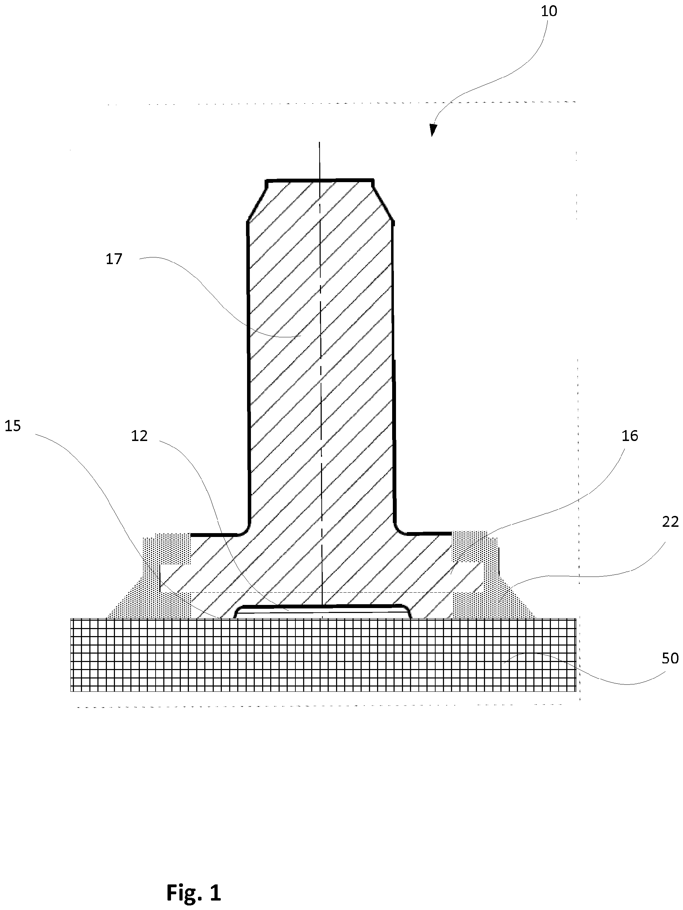

Fig. 1 zeigt die Schnittansicht eines Reibschweißelements 10 mit einem Kopf 12, eine Reibschweißgeometrie 15, wobei der Kopf 12 eine Antriebsgeometrie 16 aufweist.

Erfindungsgemäß wird das Reibschweißelement 10 zur Verbindung mit einem plattenförmigen Bauteil 50 verwendet.

Die Reibschweißverbindung entsteht an der Oberfläche des plattenförmigen Bauteils 50, wobei sich während des Reibvorgangs die Oberfläche des Bauteils 50 erwärmt. Unter Aufbringung einer Axialkraft während der Drehbewegung schmilzt die Reibgeometrie 15 auf, und verbindet das Reibschweißelement stoffschlüssig mit dem plattenförmigen Bauteil 50.

In Fig. 1 ist das Reibschweißelement 10 in einem Zustand dargestellt, bei welchem der an dessen Kopfrand aufgespritzte Kunststoffring 22 an der erwärmten Verbindungsstelle bereits aufgeschmolzen wurde. Die Verbindungsstelle wird durch die erhärtete Schmelze abgedichtet. Dadurch wird eine Korrosion der Verbindungsstelle verhindert. Vorteilhafter Weise ergibt es sich, dass auch zusätzlich Flitter oder ähnliches durch den Kunststoff 22 abgedeckt werden kann, was die Korrosionsneigung weiter reduziert.

Das hier in Fig. 1 dargestellte Reibschweißelement 10 trägt an seinem von der Reibschweißgeometrie abgewandten Ende einen Massebolzen 17. Alternativ sind auch ein Schraubenschaft oder sonstige Befestigungsmittel denkbar.

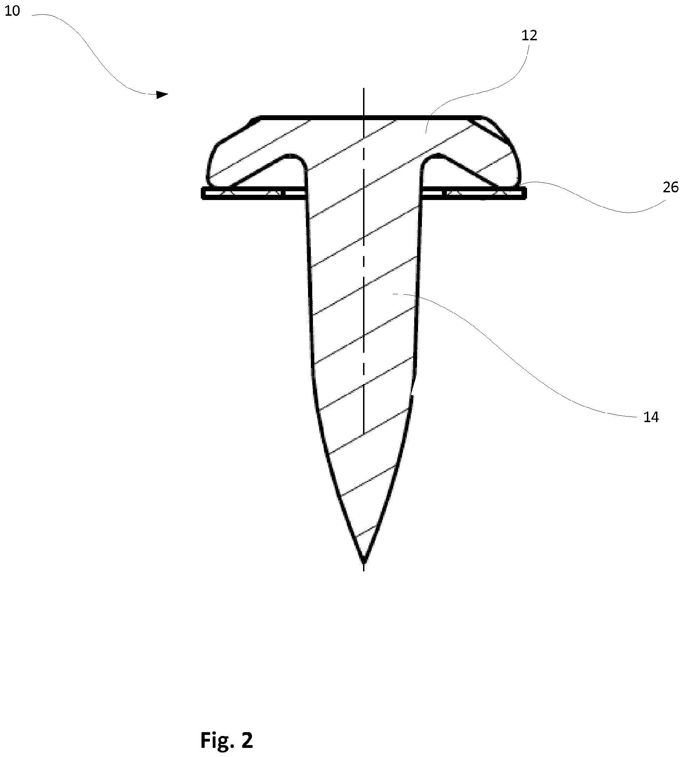

Fig. 2 zeigt einen weiteren Anwendungsbereich der Erfindung in Kombination mit einem Reibnagel 20. In dieser Ausführungsform ist die Schnittansicht eines Reibnagels 20 dargestellt, wobei der einstückige metallene Reibnagel 20 eine Kunststoffscheibe 26 durchragt. Die Kunststoffscheibe 26 liegt zwischen einem oberen Bauteil und dem Kopf 24 des Reibnagels 20. Nach Fixierung des Reibnagels 20 am Bauteilverbund ist die Kunststoffscheibe 26 am oberen Bauteil aufgeschmolzen und versiegelt auf diese Weise die Verbindungsstelle. Ein Aufschmelzen kann sowohl während der Reibphase als auch während einer separaten Stauchphase erfolgen.

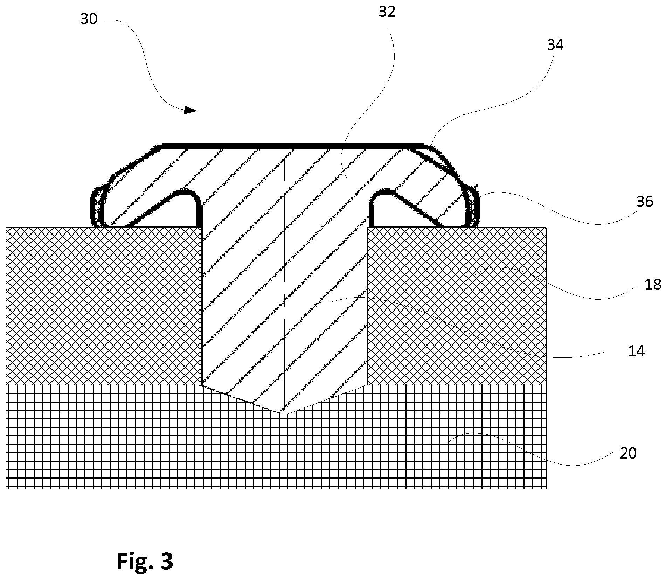

Fig. 3 zeigt ein Reibelement 30, das einstückig aus einem Metall hergestellt ist und bei welchem der Metallkopf 32, der die Antriebsgeometrie 34 trägt, in seinem Randbereich mit einem Kunststoffring 36 umspritzt ist. Auch in diesem Ausführungsbeispiel wird der Kunststoffring 36 bei Kontakt mit einem oberen Bauteil aufgeschmolzen. Die Kunststoffschmelze versiegelt dadurch die Verbindungsstelle. Die Verbindungsstelle wird so umlaufend in einem einzigen Arbeitsschritt der Reibschweißverbindung abgedichtet.

Unter Einwirkung einer Axialkraft und Drehbewegung wird das Reibschweißelement 30 durch das obere Bauteil 18 getrieben. Die Reibschweißverbindung entsteht am unteren Bauteil 20, wobei sich während des Reibvorgangs auch die Oberfläche des oberen Bauteils 18 erwärmt. In Fig. 3 ist das Reibschweißelement 30 dargestellt, wie es mit seinem Kopf 32 in das obere Bauteil 18 eingedrungen ist und der am Kopfrand befindliche Kunststoff 36 aufgeschmolzen wurde. Die Verbindungsstelle wird dadurch abgedichtet. Vorteilhafter Weise ergibt es sich, dass auch Flitter oder ähnliches durch den Kunststoff 36 abgedeckt werden kann.

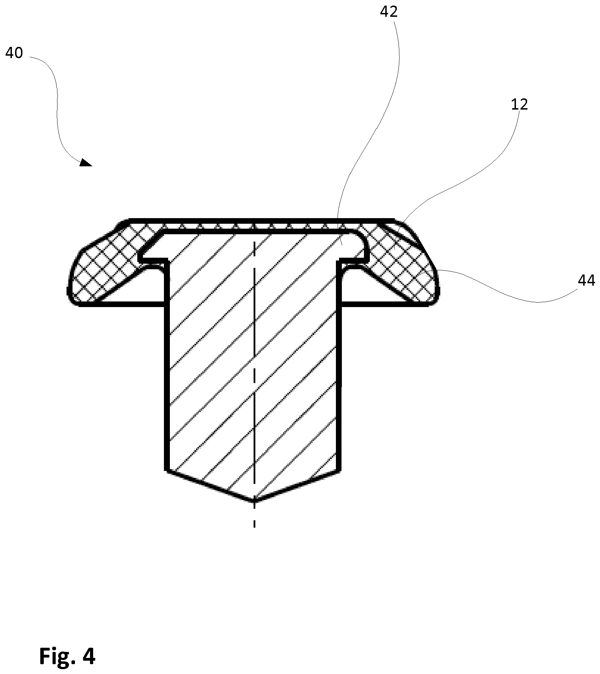

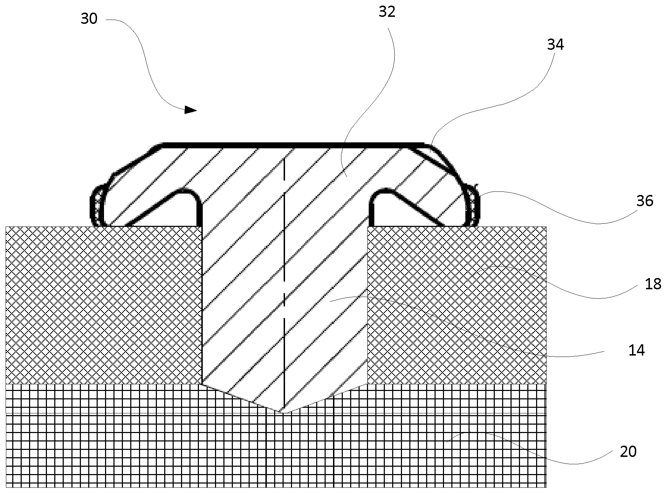

Fig. 4 zeigt eine weitere Ausführungsform eines Reibelements 40, wobei das Reibelement 40 einen sogenannten Reibrohling 42 aufweist, der an seinem der Spitze abgewandten Ende eine Verzahnung an seinem Kopf 42 aufweist, in welchen eine Antriebsgeometrie aus Kunststoff 44 eingreift. Die Antriebsgeometrie aus Kunststoff überträgt die für den Reibschweißvorgang notwendige Drehbewegung auf den Reibdorn. In dieser Ausführungsform ist der komplette Kopf mit der Antriebsgeometrie aus Kunststoff 44 überdeckt.

Diese Ausführungsform hat den weiteren Vorteil, dass neben der Verbindungsstelle auch der komplette Kopf mit einem Kunststoff überzogen ist, wodurch eine Korrosion sowohl des Reibschweißelements 10 als auch der verbundenen Bauelemente 18, 20 vermieden wird.

### Bezugszeichenliste

- 10: Reibschweißelement
- 12: Kopf
- 14: Dorn
- 15: Reibgeometrie
- 16: Antriebsgeometrie
- 18: oberes Bauteil
- 20: unters Bauteil
- 22: Kunststoff
- 24: Kopf
- 26: Kunststoffscheibe
- 30: Reibelement
- 32: Metallkopf
- 34: Antriebsgeometrie
- 36: Kunststoffring
- 40: Reibelement
- 42: Reibrohling / Kopf
- 44: Kunststoff
- 50: Bauteil

## Patentansprüche

1. Reibschweißelement (10, 30, 40) umfassend eine Reibschweißgeometrie (14, 15) und einen mit einer Antriebsgeometrie (16, 34) verbundenen Kopf (12,24,32,42) zur Verbindung mit einem Bauteil (18, 20, 50), wobei während des Reibschweißvorgangs Wärme entsteht, **dadurch gekennzeichnet, dass** am Kopf (12, 24, 32, 42) ein Werkstoff (22, 26, 36, 44) angebracht ist, der durch die im Reibschweißvorgang erzeugte Wärme bei Kontakt mit der Oberfläche eines dem Kopf nächstliegenden Bauteils (18, 50) wenigstens teilweise aufschmilzt und sich bei Abkühlung verfestigt, wodurch der Übergang vom Reibschweißelement (10, 30, 40) zu dem, dem Kopf nächstliegenden Bauteil (18, 50) versiegelt wird, wobei der Werkstoff wenigstens radial außen am Kopf (12) angeformt ist.

2. Reibschweißelement nach Anspruch 1, **dadurch gekennzeichnet, dass** der Werkstoff ein Kunststoff ist.

3. Reibschweißelement nach Anspruch 2, **dadurch gekennzeichnet, dass** der Werkstoff einen Kunststoffring (36) umfasst.

4. Reibschweißelement nach einem der vorangehenden Ansprüche, **dadurch gekennzeichnet, dass** der Werkstoff wenigstens eine Unterkante des Kopfes (12) bedeckt, wobei die Unterkante die Anlagefläche des Kopfes (12) an der Oberfläche eines Bauteils (18, 50) bildet.

5. Reibschweißelement nach einem der vorangehenden Ansprüche, **dadurch gekennzeichnet, dass** die Schmelztemperatur des Werkstoffs zwischen 250°C und 400°C liegt.

6. Reibschweißelement nach einem der vorangehenden Ansprüche, **dadurch gekennzeichnet, dass** die Antriebsgeometrie (34) aus dem Werkstoff ausgebildet ist und über einen Kopf (42) in drehsicheren Eingriff gebracht ist.

7. Reibschweißelement nach einem der vorangehenden Ansprüche, **dadurch gekennzeichnet, dass** der Werkstoff derart angeordnet und dimensioniert ist, dass während des Reibschweißvorgangs entstehende Grate oder Flitter in der Schmelze des Werkstoffs aufgenommen werden.

8. Reibschweißelement nach einem der vorangehenden Ansprüche, **dadurch gekennzeichnet, dass** der Werkstoff derart angeordnet ist, dass dieser während der Stauchphase und/oder Reibphase aufgeschmolzen wird.

9. Bauteilverbund umfassend ein Reibschweißelement nach einem der vorangehenden Ansprüche und ein dem Kopf nächstliegendes Bauteil (18), das unmittelbar mit dem Reibschweißelement (10) verbunden ist.

10. Bauteilverbund umfassend ein Reibschweißelement nach einem der vorangehenden Ansprüche, wobei der Bauteilverbund ein dem Kopf nächstliegendes Bauteil und ein unteres Bauteil umfasst, wobei das dem Kopf nächstliegende Bauteil ein oberes Bauteil (50) eines Bauteilverbunds ist, wobei das Reibschweißelement (30, 40) mit einem unteren Bauteil (20) eines Bauteilverbunds verbunden wird.

## Claims

1. Friction welding element (10, 30, 40) comprising a friction weld geometry (14, 15) and a head (12, 24, 32, 42) connected to a drive geometry (16, 34), for connection to a component (18, 20, 50), with heat being generated during the friction welding process, **characterized in that** a material (22, 26, 36, 44) is disposed on said head (12, 24, 32, 42), which material melts at least partly, owing to the heat generated during friction welding, when said material makes contact with the surface of a component (18, 50) that is closest to said head, and then solidifies as it cools down, thus sealing the passage from the friction welding element (10, 30, 40) to said component (18, 50) that is closest to said head, said material being at least formed radially on the exterior of said head (12).

2. Friction welding element according to claim 1, **characterized in that** said material is plastic.

3. Friction welding element according to claim 2, **characterized in that** said material comprises a plastic ring (36).

4. Friction welding element according to any one of the preceding claims, **characterized in that** said material covers at least a lower edge of said head (12), with said lower edge forming the contact surface of said head (12) on the surface of a component (18, 50).

5. Friction welding element according to any one of the preceding claims, **characterized in that** the melting temperature of said material is between 250°C and 400°C.

6. Friction welding element according to any one of the preceding claims, **characterized in that** said drive geometry (34) is formed of said material and is brought into non-rotatable engagement via a head (42).

7. Friction welding element according to any one of the preceding claims, **characterized in that** said material is arranged and dimensioned such that any burrs or flakes produced during the friction welding step will be absorbed in the molten mass of said material.

8. Friction welding element according to any one of the preceding claims, **characterized in that** said material is arranged such that it will be caused to melt during the upsetting stage and/or the friction stage.

9. Composite component comprising a friction welding element according to any one of the preceding claims and a component (18) closest to said head which component is directly connected to said friction welding element (10).

10. Composite component comprising a friction welding element according to any one of the preceding claims, wherein said composite component comprises a component closest to said head and a lower component, with the component closest to said head being an upper component (50) of a composite component, wherein said friction welding element (30, 40) is bonded to a lower component (20) of a composite component.

## Revendications

1. Elément de soudage par friction (10, 30, 40) présentant une géométrie de soudage par friction (14, 15) et une tête (12, 24, 32, 42) reliée à une géométrie d'entraînement (16, 34) pour liaison avec un composant (18, 20, 50), dans lequel de la chaleur est générée lors du processus de soudage par friction, **caractérisé en ce qu'**un matériau (22, 26, 38, 44) est appliqué sur la tête (12, 24,32,42), lequel fond au moins en partie au contact de la surface d'un composant (18, 50) contigu à la tête en raison de la chaleur produite lors du processus de soudage par friction et se solidifie lors du refroidissement, moyennant quoi la transition entre l'élément de soudage par friction (10, 30, 40) et le composant (18, 50) contigu à la tête est scellée, dans lequel le matériau est formé au moins radialement à l'extérieur sur la tête (12).

2. Elément de soudage par friction selon la revendication 1, **caractérisé en ce que** le matériau est une matière synthétique.

3. Elément de soudage par friction selon la revendication 2, **caractérisé en ce que** le matériau comprend une bague en matière synthétique (36).

4. Elément de soudage par friction selon l'une des revendications précédentes, **caractérisé en ce que** le matériau revêt au moins un bord inférieur de la tête (12), dans lequel le bord inférieur forme la surface d'appui de la tête (12) sur la surface d'un composant (18, 50).

5. Elément de soudage par friction selon l'une des revendications précédentes, **caractérisé en ce que** la température de fusion du matériau est comprise entre 250 °C et 400 °C.

6. Elément de soudage par friction selon l'une des revendications précédentes, **caractérisé en ce que** la géométrie d'entraînement (34) est constituée du matériau et est appliquée solidairement en rotation sur une tête (42).

7. Elément de soudage par friction selon l'une des revendications précédentes, **caractérisé en ce que** le matériau est disposé et dimensionné de telle manière que les ébarbures ou les paillettes produites lors du processus de soudage par friction sont noyées dans la fonte du matériau.

8. Elément de soudage par friction selon l'une des revendications précédentes, **caractérisé en ce que** le matériau est disposé de manière à être fondu pendant la phase d'écrasement et/ou la phase de friction.

9. Composite comprenant un élément de soudage par friction selon l'une des revendications précédentes et un composant (18) contigu à la tête directement relié à l'élément de soudage par friction (10).

10. Composite comprenant un élément de soudage par friction selon l'une des revendications précédentes, dans lequel le composite comprend un composant contigu à la tête et un composant inférieur, dans lequel le composant contigu à la tête est un composant supérieur (50) d'un composite, dans lequel l'élément de soudage par friction (30, 40) est relié à un composant inférieur (20) d'un composite.
